# EUROPEAN PATENT APPLICATION

(11) **EP 4 703 068 A1**
(43) Date of publication of application: **04.03.2026**
(21) Application number: 25199236.8
(22) Date of filing: 30.08.2025
(51) Int. Cl.: B22F 7/06, B22F 5/10, B22F 7/08, B22F 10/25, B22F 10/28, B22F 10/64, B22F 10/66, B23K 9/04, B33Y 10/00, B33Y 40/20, B33Y 80/00, B22F 5/00, C22C 1/04, C22C 33/02

(54) **ADDITIVE MANUFACTURING OF HYBRID STRUCTURES**

(30) Priority: 30.08.2024 US 202418821783; 30.08.2024 US 202418821751; 30.08.2024 US 202418821814
(71) Applicant: Relativity Space, Inc., Long Beach, CA 90815 (US)
(72) Inventor: SHERMAN, Jacob, Long Beach, 90815 (US); SHIN, Joshua, Long Beach, 90815 (US); SINHA, Aditya, Long Beach, 90815 (US); O'HARA, Dakota, Long Beach, 90815 (US); CHRISTIANSEN, Daniel, Long Beach, 90815 (US)
(74) Representative: Kilburn & Strode LLP

(57) **Abstract**

The disclosure presents a combination of additive manufacturing processes that could be used to produce different portions or features of a hybrid structure, such that a first additive manufacturing process could be used to form a complex seed part or first section of the hybrid component, and a different additive manufacturing component could be used to form a second section of the hybrid component. When two components are manufactures, a mandrel could be assembled into the first component to provide rigidity and resistance to deformation of the first component, even during and after formation of the second component on the interface surface of the first component using a second additive manufacturing process. Finally, struts could be formed directly on a base plate and before formation of the component so that the base plate temperature could increase to be in equilibrium with the temperature of the newly deposited material.

## Description

### TECHNICAL FIELD

The present disclosure relates to hybrid structures. More specifically, embodiments of the present disclosure relate to joining additively manufactured components together.

### BACKGROUND

Large structures can be assembled from smaller sub-components that are coupled or joined together. Sub-components can be coupled together using a physical joint, such as a bolted flange, or through a joining process, such as welding. Multiple coupling or joining means can be used to assemble the larger structure. In addition, sub-components of different materials can be coupled or joined such that the larger structure becomes a hybrid structure made from at least two different materials. For example, a first region of the larger component may use a material that can accommodate high temperatures, and a second region of the larger component may use a material that can accommodate high stresses or loads.

### SUMMARY

Aspects of an invention are defined in the appended claims.

Further features and advantages, as well as the structure and operation of various embodiments, are described in detail below with reference to the accompanying drawings. It is noted that the specific embodiments described herein are not intended to be limiting. Such embodiments are presented herein for illustrative purposes only. Additional embodiments will be apparent to persons skilled in the relevant art based on the teachings contained herein.

### BRIEF DESCRIPTION OF THE DRAWINGS

The accompanying drawings, which are incorporated herein and form a part of the specification, illustrate embodiments of the present disclosure and, together with the description, further explain the principles of the disclosure and to enable a person skilled in the pertinent art to make and use the disclosure.
FIG. 1 illustrates a perspective view of a hybrid structure, according to an embodiment.
FIGS. 2A-2H illustrate perspective views of hybrid structures, according to embodiments.
FIG. 3A illustrates a perspective view of an additively manufactured component disposed on a base plate, according to an embodiment.
FIG. 3B illustrates a detailed perspective view of an interface surface of the additively manufactured component of FIG. 3A, according to an embodiment.
FIG. 3C illustrates a detailed perspective view of an interface surface of the additively manufactured component of FIG. 3A, according to an embodiment.
FIG. 4 illustrates a cross-sectional side view of a hybrid structure, according to an embodiment.
FIG. 5A illustrates a cross-sectional side view of a mandrel assembled to a component, according to an embodiment.
FIG. 5B illustrates a cross-sectional side view of a mandrel assembled to a component, according to an embodiment.
FIG. 6 illustrates a detailed cross-sectional side view of the mandrel and component of FIG. 5A, according to an embodiment.
FIG. 7A illustrates a bottom view of a mandrel assembled into a component, according to an embodiment.
FIG. 7B illustrates a detailed bottom view of an interface surface of the component in FIG. 7A, according to an embodiment.
FIG. 8 illustrates a perspective view of a mandrel assembled to a component, according to an embodiment.
FIG. 9 illustrates a perspective view of a component including a plurality of struts, according to an embodiment.
FIG. 10 illustrates a side view of a component including a first plurality of struts and a second plurality of struts, according to an embodiment.
FIG. 11 illustrates a top view of a component including a plurality of struts, according to an embodiment.
FIGS. 12A-C illustrate side view of a component showing different stages of machining of the component, according to an embodiment.
FIG. 13 is a flow chart showing the steps of a method for manufacturing a hybrid structure, according to an embodiment.

The features and advantages of the embodiments will become more apparent from the detailed description set forth below when taken in conjunction with the drawings, in which like reference characters identify corresponding element throughout. In the drawings, like reference numbers generally indicate identical, functionally similar, and/or structurally similar element.

### DETAILED DESCRIPTION

Different additive manufacturing processes include different advantages and disadvantages for additively manufacturing components. For example, powder bed fusion (PBF) can produce complex parts with intricate detailed features and tight manufacturing tolerances. But, PBF is generally limited to smaller components based on the size of tools currently available. In contrast, direct-energy deposition (DED) or weld arc additive manufacturing (WAAM) can produce larger additively manufactured components, but these processes generally cannot achieve the same accuracy as PBF for forming more complex geometry, or can be expensive to add such detail to a component.

The inventors realized and discovered that a combination of additive manufacturing processes could be used to produce different portions or features of a hybrid structure, such that a first additive manufacturing process could be used to form a complex seed part or first section of the hybrid component, and a different additive manufacturing component could be used to form a second section of the hybrid component.

Operational conditions of a component may determine structural properties and/or geometry of that component. For example, where a component operates in high temperature environments and is made from a high thermal conductivity material, such as a copper alloy, the component may have thick walls because the material may conduct heat away easily. However, a component in the same operating condition but made from a low thermal conductivity material may have thinner walls to dissipate the heat energy. Manufacturing hybrid structures with thick walls may improve manufacturability because the interface surface of the first component has a larger surface area for the second additive manufacturing tool to locate on to form the second component. In contrast, manufacturing hybrid structures with thin walls may be challenging because additive manufacturing tolerances of the first component may be relatively large compared to the overall thickness of the component at the interface surface, and the second additive manufacturing tool needs to precisely locate on a thin interface surface. The inventors realized and discovered that for a thin-walled hybrid structure with a corresponding thin interface surface, due to, for example, use of low thermal conductivity materials, a second additively manufactured component could be directly formed on a planar interface surface of the first component to improve joint repeatability, integrity, and manufacturing yield. The present disclosure describes inventive features of a hybrid structure that can leverage two or more additive manufacturing processes to solve these and other problems that the inventors discovered and overcame.

The inventors realized and discovered that more than one additive manufacturing technique could be used to manufacture a hybrid structure, thereby combining the advantages of a first additive manufacturing process, such as forming complex geometry, with a second additive manufacturing process, such as one that allows for forming a large component with a relatively low cost. Generally, an additively manufactured component is formed on a base plate. The base plate provides a solid and rigid base for the component that resists deformation in the formed component during formation. The inventors realized and discovered that after a first component had been formed using a first additive manufacturing process, a mandrel could be assembled into the first component to provide rigidity and resistance to deformation of the first component, even during and after formation of the second component on the interface surface of the first component using a second additive manufacturing process.

When forming an additively manufacturing component on a base plate, the initial layers of the component have high temperature, but the base plate remains cool. Although the base plate may heat up through conduction from the deposited layers of the component, thermal disparities between the component and the base plate may still cause large thermal stresses to form in the component. Such thermal stresses can cause deformation in the component during formation resulting in poor yields and components that do not confirm to drawing tolerances. The inventors realized and discovered that specialized structures such as spaced apart struts could be formed directly on the base plate and before formation of the component so that the base plate temperature could increase to be in equilibrium with the temperature of the newly deposited material. When the temperature of the base plate is substantially in equilibrium with the new material deposited on the struts, formation of the component may begin.

The inventors realized that additive manufactured hybrid structures according to embodiments of the present invention have greater design freedom than formed or welded parts and therefore allow for greater design iteration, shorter lead times, and fewer parts for a particular application. For example, the inventors realized and discovered that conventional components with complex assemblies could be replaced by fewer additively manufactured components joined together at an interface surface.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In some embodiments of the present disclosure, the terms "about" and "substantially" can indicate a value of a given quantity that varies within 20% of the value (e.g., ±1%, ±2%, ±3%, ±4%, ±5%, ±10%, ±20% of the value). These values are merely examples and are not intended to be limiting. The terms "about" and "substantially" can refer to a percentage of the values as interpreted by those skilled in relevant art in light of the teachings herein.

Further, spatially relative terms, such as "beneath," "below," "lower," "above" "upper," and the like, may be used herein for ease of description to describe one element or feature's relationship to another element or feature as illustrated in the figures. The spatially relative terms are intended to encompass different orientations of the device in use or operation in addition to the orientation depicted in the figures. The apparatus can be otherwise oriented (rotated 90 degrees or at other orientations) and the spatially relative descriptors used herein can likewise be interpreted accordingly.

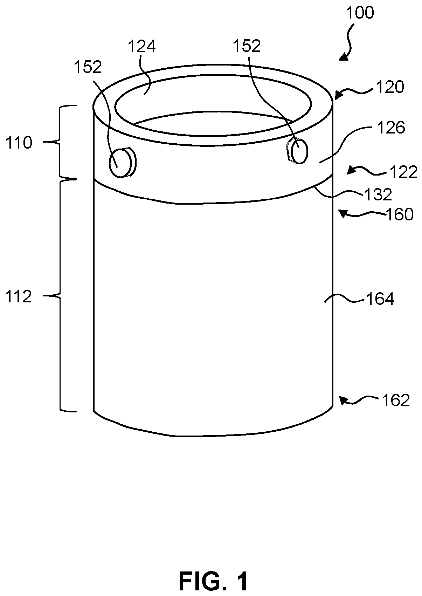

FIG. 1 illustrates an additively manufactured article 100, according to an embodiment. In some embodiments, article 100 can be a hybrid structure that includes a first component 110 and a second component 112 coupled to the first component 110. First component 110 and second component 112 are each fabricated using additive manufacturing. Additive manufacturing is a process of manufacturing an object by depositing, joining or solidifying material under computer control. The material, such as plastics, liquids or powder grains to be fused, is added together layer by layer. In this way, additive manufactured parts are formed by baseing up structural layers and fusing them together. These technologies allow a user to create a complex additively manufactured object from a CAD model. The CAD model can be input into a 3-D printer, and the printer can form parts with the user's desired shapes.

As mentioned above, a variety of technologies are available for additive manufacturing. In article 100, first component 110 can be formed with a first additive manufacturing process, and second component 112 can be formed with a second additive manufacturing process. The first additive manufacturing process is different from the second additive manufacturing process. The processes can differ, for example, in the way that the material is applied to the structure or in the way that the material, once applied, is fused to the structure. For example, the first additive manufacturing process can be powder-bed fusion and the second additive manufacturing process can be direct-energy deposition. Powder-bed fusion applies a layer of powdered material and then applies an energy source to form a solid layer from the powered material. In contrast to this layer-by-layer application of heat, direct-energy deposition delivers powder and heat simultaneously at the site of deposition.

First and second additive manufacturing processes may also be any of Laser Powder Bed Fusion, Laser-Powder Direct Energy Deposition, Wire-fed Direct Energy Deposition, Weld Arc Additive Manufacturing, Binder Jetting, and/or Bound Powder Extrusion. In some embodiments, the first additive manufacturing process can be the same as the second additive manufacturing process. In some embodiments, the first component may be formed via a conventional manufacturing process, such as casting, forging, machining, or other similar manufacturing processes, and the second component may be formed with additive manufacturing.

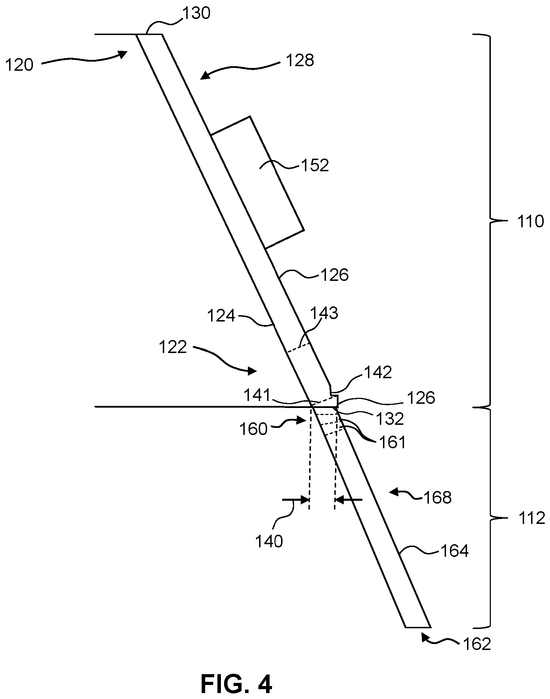

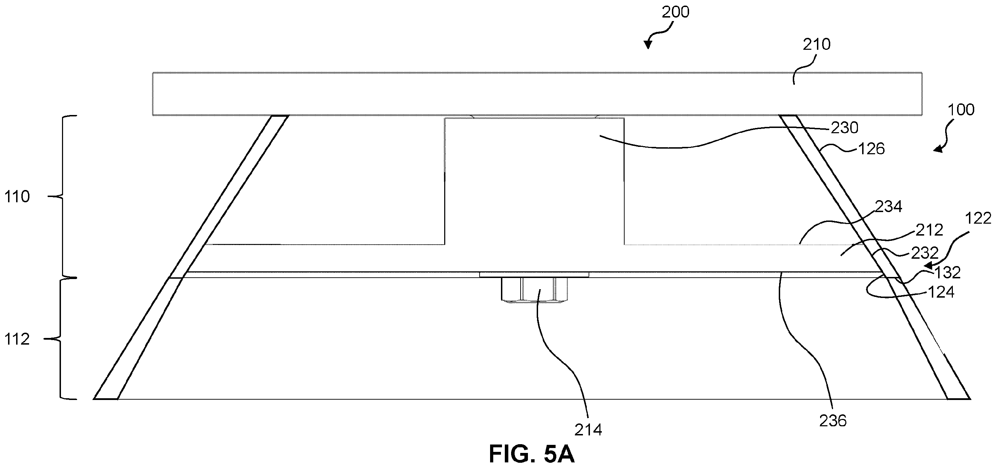

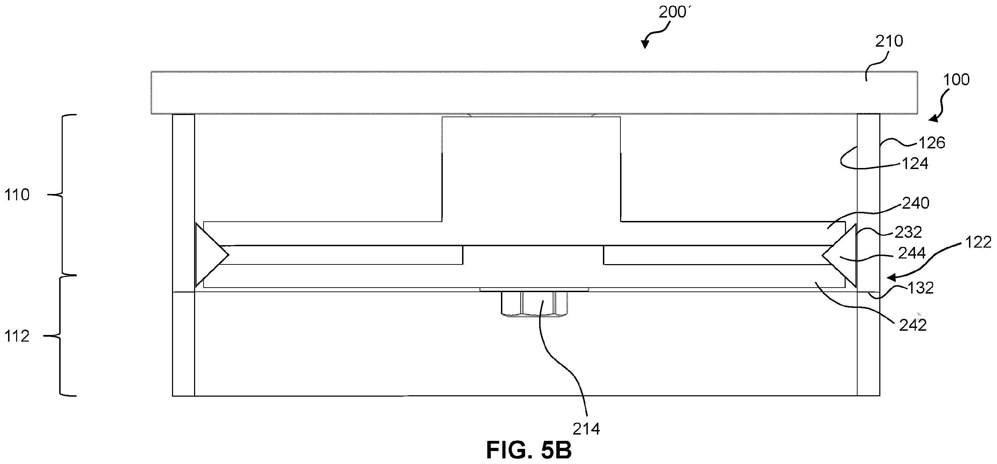

As illustratively shown in FIGS. 1, 3A, and 4, first component 110 can include an interface surface 132 at a distal end 122 of the first component 110. Second component 112 can be directly formed on the interface surface 132 of the first component 110, as shown, for example, in FIGS. 4 and 5. In some embodiments, article 100 can be a heat exchanger, nozzle, propellant tank, propellant tank and dome, propellant line, shaft, casing, or any other suitable component made using additive manufacturing.

Article 100 can include features or have characteristics that correspond to advantages of each of the first and second additive manufacturing processes that form each of the first component 110 and second component 112. For example, first component 110 can be made using powder bed fusion, and include complex features or intricate geometry that would be either impossible or prohibitively expensive using other additive manufacturing processes, or using conventional manufacturing processes. Similarly, second component 112 can be formed, for example, using powder-based direct energy deposition and be used to create a large component. In some embodiments, first component 110 can be made using powder bed fusion, direct energy deposition (wire-fed or powder based), binder jetting, bound powder extrusion, or other additive manufacturing processes. In some embodiments, second component 112 can be made using powder bed fusion, direct energy deposition (wire-fed or powder based), binder jetting, bound powder extrusion, or other additive manufacturing processes.

The first component may include more complex or intricate geometries compared with the second component. For example, the first component may include: a wall thinner than any wall of the second component; an aperture or recess having a diameter that is smaller than a diameter of any aperture or recess in the second component; and/or a build angle lower than any build angle of the second component. The build angle may be measured by determining the angle of a wall or other feature relative to a plane parallel to the interface surface of the first component described herein. The build angle of the first component may be greater than or equal to 30 degrees. Alternatively, the build angle of the first component may be less than 30 degrees.

A length and/or diameter of the first component may be smaller than a length and/or diameter of the second component. The first component may have a smaller volume than the second component. A first component length in a first dimension normal to the interface surface may be smaller than a second component length in the first dimension, wherein the first dimension is normal to the interface surface. Alternatively, or in addition, the second component may have a length or diameter in any of the numerical ranges provided in the present disclosure. The first component may have a wall thickness which is less than a wall thickness of the second component. The first component may comprise at least one aperture or recess having a smaller diameter than any aperture or recess formed in the second component. Alternatively, or in addition, the first component may have a wall thickness and/or aperture or recess diameter in any of the numerical ranges provided in the present disclosure.

The first additive manufacturing process may be capable of producing different or improved build characteristics compared with the second additive manufacturing process. Methods of the present disclosure include producing those build characteristics in the first component. For example, the first additive manufacturing process may be capable of producing a different or increased closeout radius compared with any closeout radius achievable using the second additive manufacturing process. Alternatively or in addition, the first additive manufacturing process may be capable of producing a different or smoother surface finish than the second additive manufacturing process. For example, a minimum surface roughness (e.g. 5 um, 8 um, 10 um, 15 um or 20 um Sa) achievable using the first additive manufacturing process may be lower than that achievable using the second additive manufacturing process. Therefore, the first component may have a larger close out radius and/or a smoother surface finish compared with the second component. The first component may have a closeout radius of 2 mm or greater, up to 10 mm, 20 mm, 30 mm, 40 mm or even greater. A larger closeout radius and/or smoother finish may lead to improved mechanical properties of the first component compared with the second component such as lower internal stresses and lower fatigue.

The first additive manufacturing process may be capable of a higher maximum deposition rate than that of the second additive manufacturing process. The first additive manufacturing process may be capable of a deposition rate of 70-100 cc/hr, 70-200 cc/hr, or a minimum deposition rate of 70 cc/hr.

The first additive manufacturing process produces a different microstructure in the first component from the second additive manufacturing process in the second component, even when a first material forming the first component is the same as a second material forming the second component. A difference in microstructure may be discernible by a skilled person by inspection and comparison of microstructures of the first and second component, for example using microscopy techniques known in the art. Parameters compared include but are not limited to: grain size, defect size, defect density, inclusion size and/or inclusion density.

The second additive manufacturing process may be capable of producing a larger (monolithic or continuous) component (larger in e.g. diameter or length) than the first additive manufacturing process. The second component may have a larger dimension (e.g. length or diameter) compared with the first component. The second component may have a length or diameter of at least 1 m, at least 1.2 m or at least 1.5 m.

The second additive manufacturing process may enable a change in the composition of a deposition material part way through the additive manufacturing process. For example, in DED, the composition of the powder or wire feed may be varied at different stages of additively manufacturing the same continuous component. Therefore, the second component may include a spatial difference in material composition between a first part of the second component and a second part of the second component. The first component may be compositionally uniform (i.e. have no spatial difference in material composition between any two parts).

The second additive manufacturing process may be capable of producing secondary deposition features on a component already built. That is, the second additive manufacturing process can allow secondary deposition features (on a primary deposition structure) to produce additional features such as fins, stiffeners, bosses or ports on the second component.

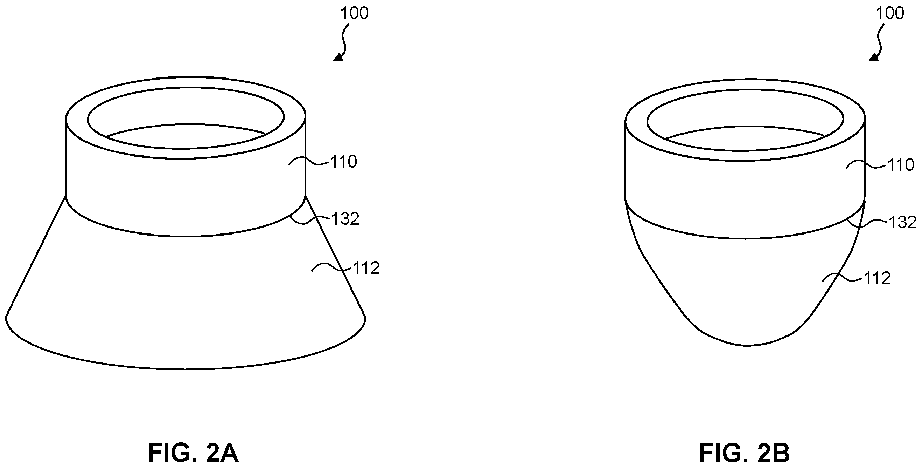

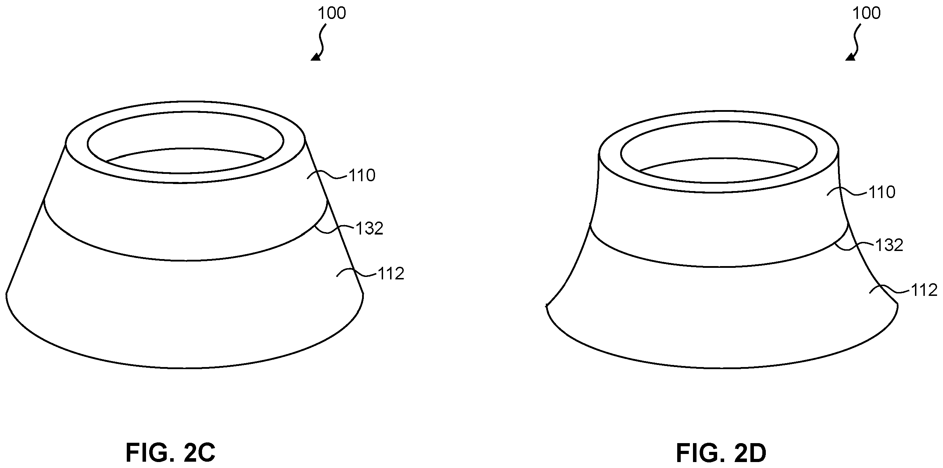

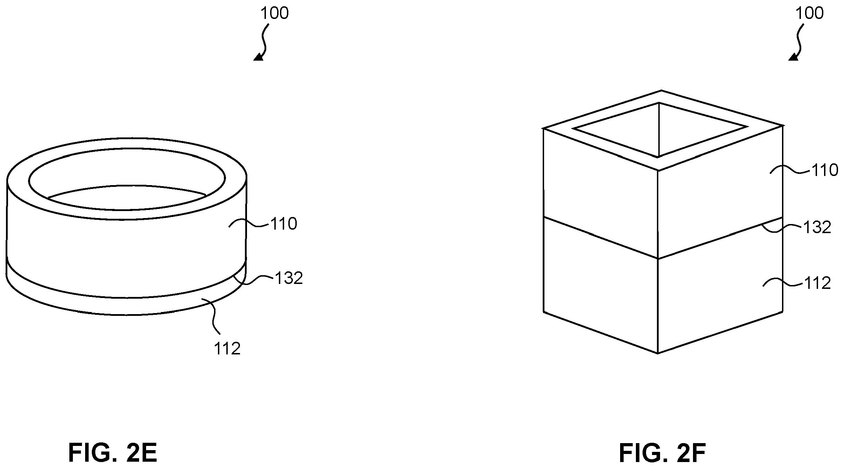

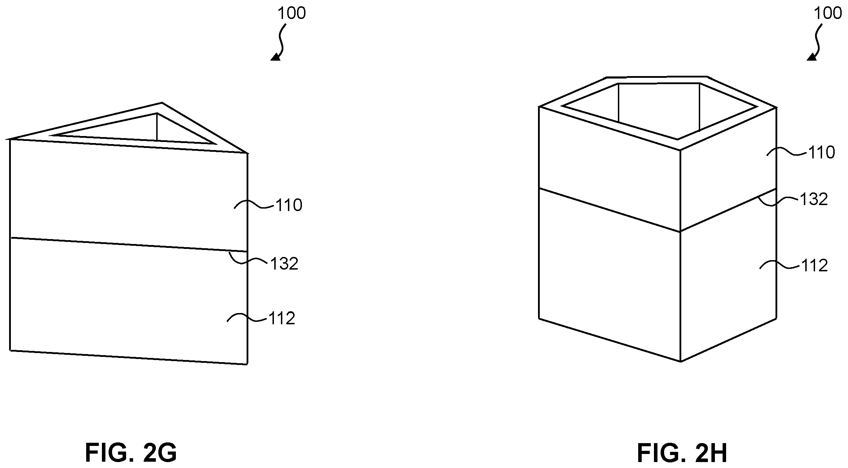

As illustratively shown in FIG. 1, first component 110 can have a first shape and second component 112 can have a second shape. For example, as shown in FIG. 1, first component 110 includes a cylindrical portion, and second component 112 include a cylindrical shape coupled to the first component 110. As illustratively shown in FIGS. 2A-2H, first component 110 and second component 112 can include multiple different shapes and cross-sections. For example, first component 110 and second component 112 can be any combination of cylindrical, dome shaped, conical, outwardly hyperbolic, square, rectangular, triangular, or any other polygonal shape. As shown, for example, in FIG. 2E, first component 110 can be a cylindrical portion and second component 112 can be a plate. In some embodiments, first component 110 can be a combination of shapes, and second component 112 can be a combination of shapes. As shown, for example in FIGS. 1 and 2A-H, first component 110 and second component 112 have the same shape and a common cross-section at interface surface 132.

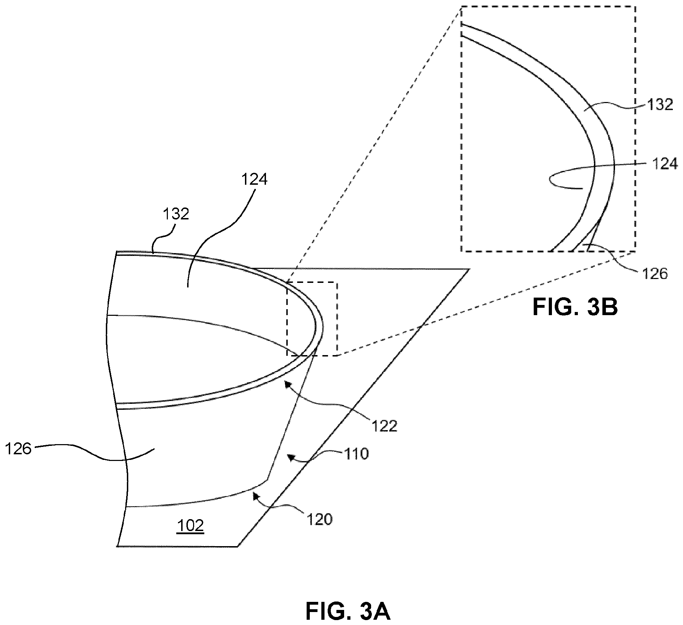

First component 110 can form a first portion or region of article 100 and couple with second component 112 as shown, for example, in FIGS. 1, 2A-H, and 4. First component 110 can be formed via a first additive manufacturing process on a base plate 102 as shown, for example, in FIG. 3A. Base plate 102 may be a tool bed for the first additive manufacturing process. Base plate 102 may generally be a large metal plate. Base plate 102 may provide a flat surface on to which first component 110 can be formed. Base plate 102 may be stiff and rigid such that a component formed directly on base plate 102 may resist deformation in the layers of material close to base plate 102.

First component 110 includes a proximal end 120, a distal end 122, a printed inner surface 124, and a printed outer surface 126 as shown, for example, in FIGS. 3A and 4. Proximal end 120 of first component 110 can be formed at the base plate 102 and first component 110 can extend away from the base plate 102 towards distal end 122. First component 110 can be formed by first placing layers to form proximal end 120 on base plate 102 (perhaps with an intermediate release layer). Additional layers are formed, layer by layer, to fabricate first component 110 until a final layer of distal end 122 is formed.

As illustratively shown in FIGS. 1, 3A, and 4, distal end 122 of first component 110 can be opposite proximal end 120. Printed inner surface 124 can extend between proximal end 120 and distal end 122 and form an inner diameter and circumference of first component 110. As first component 110 is formed, each layer defines a cross-section of the component. The inner most surface of the cross-section of each layer may be the printed inner surface 124. Depending on the manufacturing technique used to deposit each layer, printed inner surface 124 may exhibit parasitic mass. Some manufacturing techniques may exhibit zero parasitic mass, while others may exhibit non-zero parasitic mass. In various embodiments, exhibited parasitic mass may optionally be reduced or eliminated from printed inner surface 124 by a subsequent additive, conventional, or other processing technique. Where first component 110 is cylindrical or conical, printed inner surface 124 forms the inner diameter or circumference of first component 110.

As illustratively shown in FIGS. 1, 3A, and 4, printed outer surface 126 can extend between the proximal end 120 and distal end 122 and form an outer diameter and circumference of first component 110. As first component 110 is formed, each layer defines a cross-section of the component. The outer most surface of the cross-section of each layer may be the printed outer surface 126. Printed outer surface 126 may form an outer surface profile of first component 110. Like with printed inner surface 124, printed outer surface 126 may exhibit parasitic mass, which if present may optionally be reduced or eliminated from printed outer surface 126 by a subsequent additive, conventional, or other processing technique.

In addition to ribs 150, first component 110 can include other features that increase complexity of first component 110 relative to second component 112. For example, as shown in FIGS. 1 and 4, first component 110 can include a plurality of members 152 extending away from printed outer surface 126. In contrast, in some embodiments, second component 112 may include a substantially smooth outer surface 164. Substantially smooth outer surface 164 may not include any ports or members extending outwardly from smooth outer surface 164. In some embodiments, the plurality of members 152 can include a plurality of ports. In some embodiment, first component 110 can include a plurality of apertures or passages formed through first component 110. In some embodiments, plurality of member 152 can include arms, protrusions, ribs, and/or attachment features that extend outwardly away from printed outer surface 126. In some embodiments, plurality of members 152 can extend inwardly away from printed inner surface 124. In some embodiments, first component 110 is circular and the plurality of members 152 extend radially outward from printed outer surface 126.
First component 110 may be formed from a first material 128 as shown, for example, in FIG. 4. In some embodiments, first material 128 can be a low thermally conductive material. For example, the first material may comprise a metal or an alloy. The first material may have a lower thermal conductivity than the second material. For example, first material 128 can be a nickel-chromium-based superalloy, such as, Inconel-718 (IN718). In some embodiments, first material 128 can have a room temperature thermal conductivity material property between about 9.1 watts per meter Kelvin and about 11.4 watts per meter Kelvin. In some embodiments, first material 128 can have a room temperature thermal conductivity property between about 10.0 watts per meter Kelvin and about 11.0 watts per meter Kelvin. In some embodiments, first material 128 can have a room temperature thermal conductivity of approximately 10.4 watts per meter Kelvin. Low conductivity may drive the need for a mandrel. For higher conductivity materials, a mandrel may be less useful. As the materials are deposited layer by layer, the material may have a pattern called a beading. The beading may have particular shape, size, or pattern characteristic of the manufacturing process used to form first component 110. By examining this beading, a skilled artisan may be able to understand what manufacturing process was used to fabricate first component 110. As the skilled person will appreciate, different additive manufacturing processes may produce different characteristics in the component that are present after the manufacturing process. Beading characteristics is but one example of such a characteristic. Other examples include microstructure, closeout radius, surface finish, parasitic mass pattern, or parasitic mass volume as described herein.

After the first component 110 is formed on base plate 102 by the first additive manufacturing process, proximal end 120 of first component 110 is removed from base plate 102. For example, proximal end 120 can be EDM wire cut to remove first component 110 from base plate 102. First component 110 may be removed from base plate 102 so that other machining operations can be performed on first component 110 that would otherwise be prohibited while first component 110 is attached to base plate 102. For example, when first component 110 is removed from base plate 102, first component 110 can be machined to form a top surface 130 and an interface surface 132. Further, when first component 110 is removed from base plate 102, first component 110 can have inspections performed, such as dimensional inspections, material inspections, water flow testing, and other component testing procedures.

Proximal end 120 can be machined to form top surface 130. First component 110 may be clamped in place using plurality of member 152, printed inner surface 124, or printed outer surface 126 to secure first component 110 while proximal end 120 is machined. In some embodiments, proximal end 120 can be turned, milled, ground, EDM wire cut, or other suitable machining methods. Top surface 130 may be a planar surface and form a datum plane for downstream machining of first component 110.

Distal end 122 of first component 110 can be machined to form interface surface 132. As will be described in more detail below, mandrel 200 can be assembled on to first component 110 to secure first component 110 while distal end 122 is machined. In some embodiments, distal end 122 can be turned, milled, ground, EDM wire cut, or other suitable machining methods. As illustratively shown in FIGS. 3A and 3B, in various embodiments interface surface 132 is a planar surface, in other words, a surface lying in a plane that is parallel to top surface 130. In other embodiments not shown in FIGS. 3A and 3B, interface surface 132 is a conic surface, in other words, a surface lying in a cone having a peak substantially centered at a point nearer proximal end 120 than interface surface 132 and on a center axis of first component 110, or lying in an inverted cone having a peak substantially centered at a point further from proximal end 120 than interface surface 132 and on the center axis. In some embodiments, interface surface 132 is substantially circular and can be formed, via the first additive manufacturing process, with a roundness tolerance of +/- 0.25 millimeters. As will be explained in more detail below, second component 112 is formed on interface surface 132 to couple first component 110 and second component 112 together.

Interface surface 132 may extend from printed inner surface 124 to printed outer surface 126 as shown, for example, in FIGS. 3A, 3B, and 4. Interface surface 132 may have a first width 140 between printed inner and outer surfaces 124, 126 as shown, for example, in FIG. 4. In some embodiments, first width 140 can be between about 5 millimeters and 25 millimeters. In some embodiments, first width 140 can be between about 7 millimeters and 15 millimeters. In some embodiments, first width 140 can be about 10 millimeters. In various embodiments, the planar surface can have a flatness tolerance of 10 thousandths of an inch, or even less than that.

As illustratively shown in FIG. 4, first component 110 can include a vertical surface 142 machined into printed outer surface 126. Vertical surface 142 may be spaced apart from interface surface 132 such that interface surface 132 still extends between printed inner and outer surfaces 124, 126. However, in another embodiment, vertical surface 142 is machined into printed outer surface 126 so as to meet interface surface 132 directly, at a ninety degree angle in embodiments where interface surface 132 is a planar surface, so that interface surface 132 extends between printed inner surface 124 and vertical surface 142. In some embodiments, vertical surface 142 can be used as a datum surface to inspect the dimensions of first component 110. For example, vertical surface 142 can be machined with respect to the inner or outer printed surfaces 124, 126 at interface surface 132. In this way, an operator can use a machined surface to inspect other diameters or radial features of first component 110 relative to vertical surface 142 to check conformity of the first component's 110 dimensions. FIG. 4 should be understood as a cross section that can be revolved (for circular components) or linearly extended through several angular turns (for non-circular components) for any of the components shown in FIGS. 2A-H.

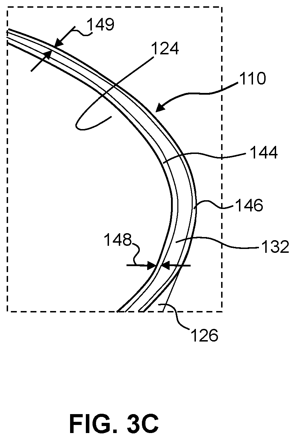

Interface surface 132 can include two or more interface lands 144, 146 as shown, for example, in FIG. 3C. Each interface land 144, 146 can be a protrusion that extends circumferentially around interface surface 132. Interface lands 144, 146 can have second widths 148, 149 less than first width 140. In some embodiments, second widths 148, 149 are equal, while in others they are different. In some embodiments, second width 148 of interface lands 144, 146 can be between about 0.5 millimeters and about 3.0 millimeters. In some embodiments, second width 148 of interface lands 144, 146 can be between about 0.5 millimeters and about 1.5 millimeters. In some embodiments, second width 148 of interface lands 144, 146 can be about 1.0 millimeters. In some embodiments, second width 148 of interface lands 144, 146 can be between about 2 percent and about 30 percent of first width 140 of interface surface 132. In some embodiments, second width 148 of interface lands 144, 146 can be between about 5 percent and about 20 percent of first width 140 of interface surface 132. In some embodiments, second width 148 of interface lands 144, 146 can be about 10 percent of first width 140 of interface surface 132.

The interface lands 144, 146 are areas of the interface surface 132 upon which the second additive manufacturing process builds to produce the second component 112. Each interface land 144, 146 may extend circumferentially around the interface surface. That is, the interface lands 144, 146 may follow the circular or annular shape of the interface surface. Interface lands 144, 146 may be concentric with each other and concentric with the shape of the interface surface 132. One interface land 144 may have a smaller radius and/or smaller circumference than the other interface land 146. The one interface land 144 may have an inner radius that is greater than or equal to the inner radius of the interface surface 132. The other interface land 146 may have an outer radius that is smaller than or equal to the outer radius of the interface surface 132. As previously stated, each interface land 144, 146 can be a protrusion that extends circumferentially around interface surface 132. However the present disclosure is not limited thereto and the interface lands 144, 146 may be areas on the interface surface which do not protrude therefrom. The interface lands 144, 146 may protrude from the interface surface 132 in a direction normal to the interface surface. The outer radius of the one interface land 144 may be smaller than the inner radius of the other interface land 146 so that there is a gap or space between the interface lands 144, 146.

In some embodiments, interface surface 132 may be positioned between environments at different temperatures from each other, and thus experiences a thermal gradient. In some embodiments, first normal width 141 and second normal width 143 are substantially the same, such that interface surface 132 experiences a thermal gradient like that across the bulk of first component 110. In other embodiments in which first normal width 141 (and thus the local thickness of interface surface 132 at first width 140) is wider than an adjacent section of first component 110 at second normal width 143, interface surface 132 may experience larger thermal gradients than other sections of first component 110. These thermal gradients may affect the joint integrity between the first component 110 and the second component 112. Reducing one or both of first width 140 at interface surface 132, and first normal width 141, may reduce thermal gradients at the joint. Similar thermal gradients may exist across interface lands 144, 146 when the thermal conditions on each side of the interface lands 144, 146 are different.

In some embodiments, interface lands 144, 146 may protrude away from interface surface 132 (e.g. in a direction normal to the interface surface). In some embodiments, interface surface 132 may include a plurality of apertures or recesses adjacent to and between interface lands 144, 146; for example for the purpose of carrying moving fluids. In some embodiments, interface lands 144, 146 may be spaced apart. In some embodiment, a first interface land 144 may extend away from printed inner surface 124 and a second interface land 146 may extend away from printed outer surface 126. In some embodiments, first interface land 144 may be spaced apart from printed inner surface 124. In some embodiments, second interface land 146 may be spaced apart from printed outer surface 126. In some embodiments, interface lands may further include radially extending lands that extend between first and second interface lands 144, 146.

In some embodiments, walls of the first component may have a thickness between about 0.4 millimeters and about 3.0 millimeters. In some embodiments, walls of the first component may have a thickness between about 0.4 millimeters and about 1.5 millimeters. In some embodiments, walls of the first component may have a thickness between about 0.4 or 0.5 millimeters and about 1.0 millimeters. In some embodiments, walls of the first component may have a thickness less than or equal to 1.0 millimeters. The second additive manufacturing process may be incapable of forming wall thicknesses of less than 1.0 mm.

The apertures or recesses in the first component may have a characteristic width (e.g. a diameter) of less than about 1.0 mm, optionally between about 0.5 mm and 1.0 mm. The second additive manufacturing process may be incapable of forming such apertures or recesses.

Second component 112 can be formed on interface surface 132 of the first component 110 via the second additive manufacturing process. For example, where the second additive manufacturing process of second component 112 is direct energy deposition, additional material can be fused to first component 110 to form second component 112, as part of the second additively manufacturing process, to interface surface 132 of first component 110. In one embodiment, wire arc additive manufacturing (WAAM) may be used. In some embodiments, the additive manufacturing process fuses a second material 168 of second component 112 to the interface surface 132 and first material 128 of first component 110.

In some embodiments, second component 112 can be formed on each of interface lands 144, 146. Interface surface 132 and the portion of interface lands 144, 146 that fuses to second component 112 may be planar to improve positional accuracy of the second additive manufacturing tool head relative to the first component 110 and narrow interfacing geometry. For example, the planar interface surface 132 can have a single height relative to the tool bed of the second additive manufacturing tool, which eliminates a height variable (Z-axis) in positioning the tool head. Accordingly, the tool head can be accurately positioned in the width or length directions (X-axis and Y-axis) such that the second component is formed precisely on the interface lands 144, 146. In various other embodiments, conical interface surfaces having varying heights (Z-axis) across the width of the interface surface may introduce additional tolerances when locating the interface lands.

As the second component is formed on the interface lands, and is additively manufactured by building on the interface lands, the second component may take on the geometry of the interface lands at the interface with the first component. There may be continuity of geometrical features between the first and second component at the interface of the second component and first component, both in relation to the interface lands and any spaces between adjacent interface lands, whether the interface lands are circumferentially or radially extending. The second component formed on the interface lands 144, 146, as well as any spaces therebetween, may continue through at least 1%, at least 2%, at least 5%, at least 10%, at least 20%, at least 30%, at least 50%, at least 60%, at least 70%, at least 80%, at least 90%, at least 95% or at least 98% of the length of the second component in a direction away from the interface surface 132 (e.g. in the build direction of the second component).

As illustratively shown in FIGS. 1 and 4, second component 112 can be formed on the interface surface 132 of first component 110 and extend away from the first component 110. Second component 112 can include a proximal end 160, a distal end 162, and substantially smooth outer surface 164. However, depending on the manufacturing technique used to deposit each layer, outer surface 164 may exhibit parasitic mass. Some manufacturing techniques may exhibit zero parasitic mass, while others may exhibit non-zero parasitic mass. In various embodiments, exhibited parasitic mass may optionally be reduced or eliminated from outer surface 164 by a subsequent additive, conventional, or other processing technique. Second component 112 can be formed by first placing layers to form proximal end 160 directly on interface surface 132. Additional layers are formed, layer by layer, to fabricate second component 112 until the layers are joined representing distal end 162.

Proximal end 160 of second component 112 couples with interface surface 132 of first component 110 as shown, for example, in FIG. 4. In some embodiments, proximal end 160 and thus second component 112 may extend perpendicularly away from interface surface 132. In other embodiments, second component 112 may be formed with one or more wedge-shape layers 161 by the second additive manufacturing process, for the purpose of extending proximal end 160 and thus second component 112 away from the perpendicular. In other words, as the wedge-shape layers 161 are deposited, second component 112 may change direction from extending perpendicularly from interface surface 132 to extending at an angle relative to interface surface 132 such that second component 112 may extend in the same overall direction as first component 110, so that both together have a conical shape. However, in other embodiments first and second components 110, 112 may be set at different angles from each other, forming a compound bi-conical shape. Distal end 162 may be opposite proximal end 160 and form a terminating end of article 100. In some embodiments, a third component may be formed on distal end 162 of second component 112 to further extend article 100. In some embodiments, outer surface 164 can be substantially smooth such that outer surface does not include any protruding features such as ports, arms, or other extending members.

Second component 112 may have second material 168. In some embodiments, second material 168 can be different to first material 128. In some embodiments, the second material comprises a metal or an alloy. In some embodiments, second material 168 can be an iron-nickel-based superalloy, such as, for example, HR-1. In some embodiments, second material 168 can have a second bead characteristic based on how the second additive manufacturing process forms second component 112. As the materials are deposited layer by layer, the material may have a pattern called a beading. The beading may have particular shape, size, or pattern characteristic of the manufacturing process used to form second component 112. By examining this beading, a skilled artisan may be able to understand what manufacturing process was used to fabricate second component 112.

In some embodiments, first component 110 can be heat treated before second component 112 is printed upon it. In some embodiments, the hybrid structure of article 100 can be heat treated as a single unit, either after first component 110 is heat treated separately, or as a first heat treatment. Heat treatment parameters can be selected that are beneficial to both the first material 128 and the second material 168. For example, heat treatment parameters can be selected that increase the ductility of the first material 128 and also increase the strength of the second material 168. In some embodiments, heat treatment parameters can be selected to optimize first and second material 128, 168 for the operating conditions that article 100 will be exposed to when in use. In some embodiments, increasing ductility of the first material 128 of first component 110 may be important to reduce crack propagation of cracks in first component 110, thereby increasing toughness of first component 110.

### Mandrel tool

In some embodiments, a mandrel 200 can be used during manufacture of article 100 to maintain roundness of first component 110 during formation of second component 112 as shown, for example, in FIGS. 5A-8. Mandrel 200 can offer any of several different functions. First, mandrel 200 can be used to position first component 110 during machining of interface surface 132. Second, mandrel 200 can be used to position first component 110 on the second additive manufacturing tool bed such that second component 112 can be precisely formed on interface surface 132 of first component 110. Third, mandrel 200 can be used to position article 100 for further downstream machining operations of article 100 after formation of second component 112 on first component 110. Fourth, mandrel 200 can be used to lift or transport first component 110 and/or article 100 between manufacture operations. It will be understood that the utility of mandrel 200 in maintaining roundness as discussed herein applies similarly in the context of non-circular articles 100 depicted in FIGS. 2A-2H, in which case a suitable mandrel 200 may maintain the straightness of one or more walls or the angle between two walls, as the case may be.

As illustratively shown in FIG. 5A, mandrel 200 can be detachably coupled to first component 110. In some embodiments, mandrel 200 can be detachably coupled to first component 110 after first component 110 has been formed by the first additive manufacturing process and removed from base plate 102. In some embodiments, mandrel 200 can be detachably coupled to first component 110 after top surface 130 has been machined into proximal end 120. Mandrel 200 may include a plate 210, a wedge 212, and a bolt 214. Each of these components is discussed in turn. In one embodiment, one or both of base plate 102 and mandrel 200 can include mitee bites which are used to get first component 110 into position and maintain its position when wedge 212 is removed. This technique allows special access to component 110's inner surface and some of its internals, even without losing position control.

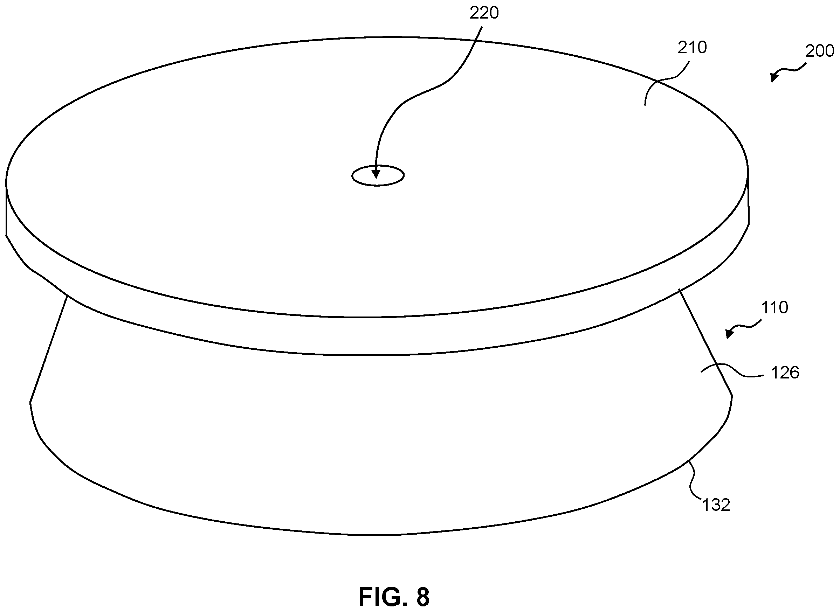

Plate 210 is located on and contacts top surface 130 of first component 110. Plate 210 may also be configured to couple to and position first component 110 relative to a tool bed for machining of interface surface 132 or the second additive manufacturing tool bed for formation of second component 112. In some embodiments, plate 210 can include a plurality of apertures configured to detachably couple with said tool beds. As illustratively shown in FIG. 8, plate 210 can include center aperture 220 configured to center the mandrel 200 and first component 110 on the second additive manufacturing tool bed for formation of the second component 112. Although component 110 is depicted as a conic in FIG. 8, the mandrel techniques discussed herein can be applied to component 110 of any article 100 depicted in FIGS. 2A-2H.

Bolt 214 can detachably couple plate 210 and wedge 212 together as shown, for example, in FIG. 5A. Wedge 212 may include a through-hole dimensioned such that the shaft of bolt 214 may extend through the through-hole, but a head of bolt 214 is blocked from extending through the through-hole. The shaft of bolt 214 may extend through wedge 212 and couple with plate 210. In some embodiments, bolt 214 can be threadably coupled to plate 210.

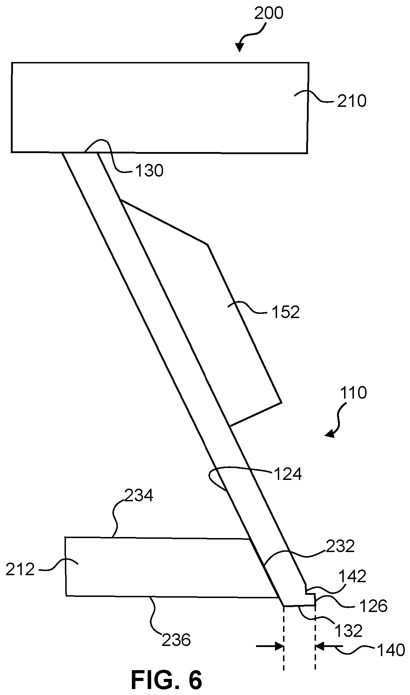

As illustratively shown in FIGS. 5A and 6, wedge 212 can be inserted into first component 110 from the distal end 122 of first component 110 and detachably coupled to plate 210. Wedge 212 can be configured to contact printed inner surface 124 of first component 110. As illustratively shown in FIG. 5A, wedge 212 can include coupling portion 230, wedge surface 232, top surface 234, and bottom surface 236, each described in turn.

Coupling portion 230 removably couples with plate 210 as shown, for example, in FIG. 5A. In some embodiments, coupling portion 230 can be a sleeve that overlaps a protrusion extending from plate 210. In some embodiments, coupling portion 230 can be threadably coupled to a protrusion extending from plate 210 to couple therewith. Wedge surface 232 may extend between top surface 234 and bottom surface 236. Top surface 234 may extend perpendicularly away from coupling portion 230 toward wedge surface 232. In some embodiments, top surface 234 may extend at an oblique angle between coupling portion 230 and wedge surface 232. As shown, for example, in FIG. 5A, when mandrel 200 is detachably coupled to first component 110, bottom surface 236 of wedge 212 can be spaced apart from distal end 122 of first component 110 so that distal end 122 of first component 110 can be machined to form interface surface 132 without interference between the machining tool and bottom surface 236 of wedge 212. In this way, the risk that the machining tool may inadvertently cause damage to mandrel 200 is alleviated.

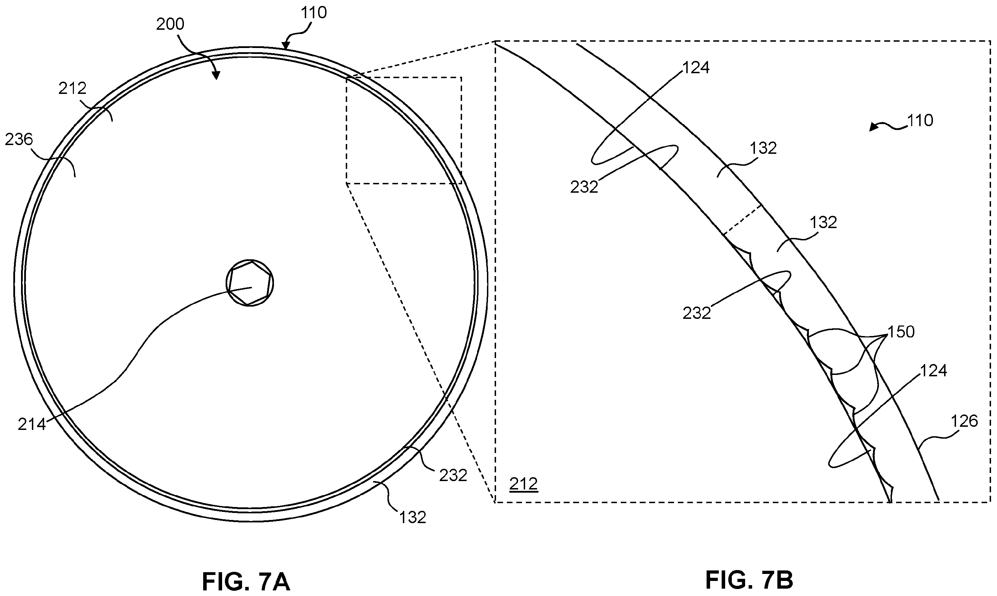

In some embodiments, wedge surface 232 can be configured to contact printed inner surface 124 of first component 110 as shown, for example, in FIGS. 5A, 6, and 7A-7B. In some embodiments, printed inner surface 124 can have a smooth conical inner surface such that a substantial area of wedge surface 232 contacts printed inner surface 124 as shown, for example, in FIG. 7B. In some embodiments, printed inner surface 124 can include the plurality of ribs 150 that undulate around the circumference of the printed inner surface 124 and form a plurality of line contacts with wedge surface 232 as shown, for example, in FIG. 7B. In some embodiments wedge surface 232 contacts between about 1 percent and 30 percent of the total surface area of printed inner surface 124. In some embodiments wedge surface 232 contacts less than 20 percent of the total surface area of printed inner surface 124. In some embodiments wedge surface 232 contacts less than 10 percent of the total surface area of printed inner surface 124. In some embodiments wedge surface 232 contacts less than 5 percent of the total surface area of printed inner surface 124. In some embodiments wedge surface 232 contacts between about 5 percent and about 25 percent of a total length of printed inner surface 124. In some embodiments wedge surface 232 contacts between about 10 percent and about 20 percent of a total length of printed inner surface 124.

In general, when any component is produced, the component will include tolerances on all manufactured surfaces. Tolerances are small defects in the dimensions of the component such that they may not match an exact dimensions on an engineering drawing, but will be within a small tolerance range of the absolute dimension. Certain manufacturing processes are capable of achieving dimensions in tighter or smaller tolerance ranges than others. For example, machining a surface can achieve a tighter tolerance range than casting a surface. In some embodiments, when first component 110 is additively manufactured, interface surface 132 of first component 110 can include a roundness tolerance, i.e. a small dimensional range of the circular cross-section that becomes marginally oval. Mandrel 200 is configured to maintain a tight roundness tolerance of interface surface 132 of first component 110 (1) after first component 110 has been formed by the first additive manufacturing process, and (2) when second component 112 is formed on interface surface 132. For example, mandrel 200 can be configured to maintain a roundness tolerance of interface surface 132 between plus or minus (+/-) 0.25 millimeters. If interface surface 132 exceeds the tolerance, the second additive manufacturing tool may not form second component 112 accurately on interface surface 132 or the narrower interface lands 144, 146, affecting the joint integrity between the first and second components 110, 112, or even causing an outright build failure or scrapped part.

In the illustrative embodiments shown in FIGS. 5A and 6, first component 110 has a conical shape, and wedge 212 has a corresponding conical shape. In some embodiments, bolt 214 can be tightened to pull wedge 212 towards plate 210. As wedge 212 translates towards plate 210, initially wedge surface 232 of wedge 212 contacts printed inner surface 124 of first component 110. In some embodiments, wedge surface 232 may first contact any portions of printed inner surface 124 that are outside the desired roundness tolerance range. As wedge 212 continues to translate through first component 110, wedge surface 232 exerts a force against printed inner surface 124. In some embodiments, the force exerted by wedge 212 may deform first component 110 to bring first component 110 back within the roundness tolerance. In some embodiments, the force exerted by wedge 212 on printed inner surface 124 may deform first component 110 from a printed shape to a corrected shape. For example, first component 110 may be slightly oval after the first additive manufacturing process, and may be corrected to circular after the wedge 212 has exerted a force against printed inner surface 124. In some embodiments, first component 110 may be within the desired roundness tolerance range after the formation, and the force exerted by wedge 212 does not change a shape of first component 110.

In some embodiments, when first or second components 110, 112 are formed, there can be large temperature differences across the component which produce large stress gradients across the part. These stress gradients can cause the first and second components 110, 112 to deform as they are additively manufactured. In some embodiments, first component 110 is formed on base plate 102. Base plate 102 is a rigid and stiff base that does not deform during formation of first component 110 due to the internal stress gradients in first component 110. In some embodiments, when second component 112 is formed on interface surface 132 of first component 110, the internal stresses in second components 112 are large enough to cause deformation of both second component 112 and first component 110. In some embodiments, mandrel 200 increases the stiffness of first component 110 such that the roundness tolerance of interface surface 132 can be maintained during formation of second component 112.

In the illustrative embodiment shown in FIG. 5B, mandrel 200 ' is a cylindrical ring that exerts a force against vertical walls of first component 110, such as a cylindrical component, for example, as shown in FIGS. 1, 2B, and 2E. In some embodiments, mandrel 200' can be an expanding mandrel that includes inner rings 240, 242 and an expanding outer ring 244. In some embodiments, inner and outer rings 240, 242, 244 may include opposite conical surfaces such that as the rings move relative to one another, the inner rings 240, 242 exerts a force on the expanding outer ring 244, such that the expanding outer ring 244 exerts a perpendicular force against the inner surface 124 of the first component 110. For example, bolt 214 can be tightened to pull inner ring 242 towards inner ring 240 and plate 210. As inner ring 242 translates towards inner ring 240, the conical faces contact expanding outer ring 244, forcing expanding outer ring 244 toward and into contact with printed inner surface 124 of first component 110. In some embodiments, expanding outer ring 244 may first contact any portions of printed inner surface 124 that are outside the desired roundness tolerance range. As inner rings 240, 242 continue to translate relative to one another, expanding outer ring 244 exerts a force against printed inner surface 124. In some embodiments, the force exerted by expanding outer ring 244 may deform first component 110 to bring first component 110 back within the roundness tolerance. In some embodiments, the force exerted by expanding outer ring 244 on printed inner surface 124 may deform first component 110 from a printed shape to a corrected shape.

### Thermal Stress Delaying Struts

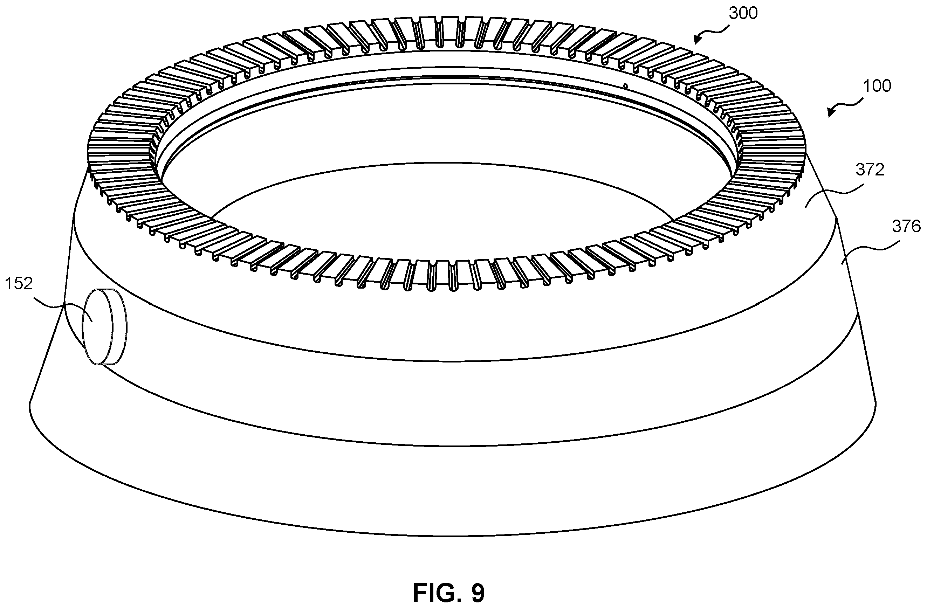

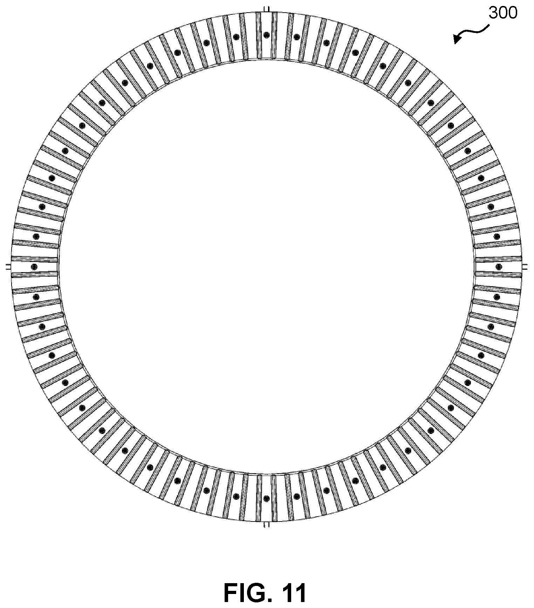

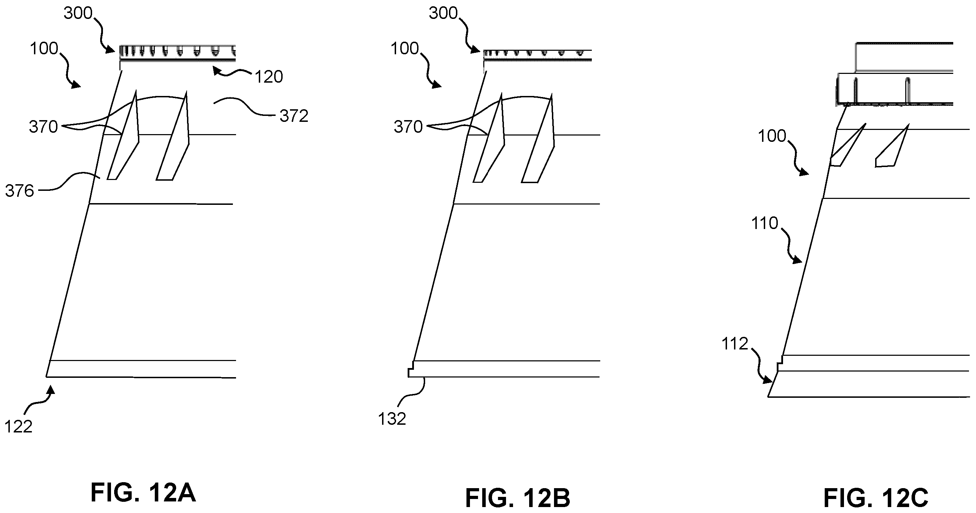

In some embodiments, a plurality of struts 300 may be formed on base plate 102 before formation of article 100 as shown, for example, in FIGS. 9-12A. Plurality of struts 300 may be formed via additive manufacturing. In the illustrative embodiment shown in FIGS. 9 and 12A, plurality of struts 300 can be formed as part of the same additive manufacturing process that forms first component 110. Plurality of struts 300 may be arranged in the corresponding shape of proximal end 120 of first component 110. For example, as shown in FIG. 9, proximal end 120 of first component 110 is cylindrical, and plurality of struts 300 are arranged in a circular pattern. In some embodiments, each strut of the plurality of struts 300 are spaced apart from an adjacent strut of the plurality of struts 300. As illustratively shown in FIGS. 9 and 11, the plurality of struts 300 are circumferentially spaced apart from one another and equally spaced apart from one another. Each strut may be separate by one another by air gaps. In some embodiments, spacing between adjacent struts of the plurality of struts 300 may vary. The part shown in FIG. 9 can be asymmetrical in some embodiments as depicted, or symmetrical in other embodiments as described elsewhere herein.

Additive manufacturing produces heat in the layers of material that are deposited to form a component. Typically, older layers in the component, which were formed first, cool down relative to the currently formed layer that is actively being printed. Although there is a temperature gradient between the first formed layer and the currently formed layer, thermal gradients and associated thermal stresses can be accommodated by modifications of geometry, printing temperatures, and/or deposition rates of process. However, a problem exists where components are additively manufactured on a cold base plate 102 because a base plate 102 takes more energy and time to increase in temperature, while the component 110 being formed is immediately hot. This forms a large thermal gradient, and corresponding thermal stresses, across the component 110 being formed. This can lead to deformation of the component and/or low manufacturing yields of conforming parts.

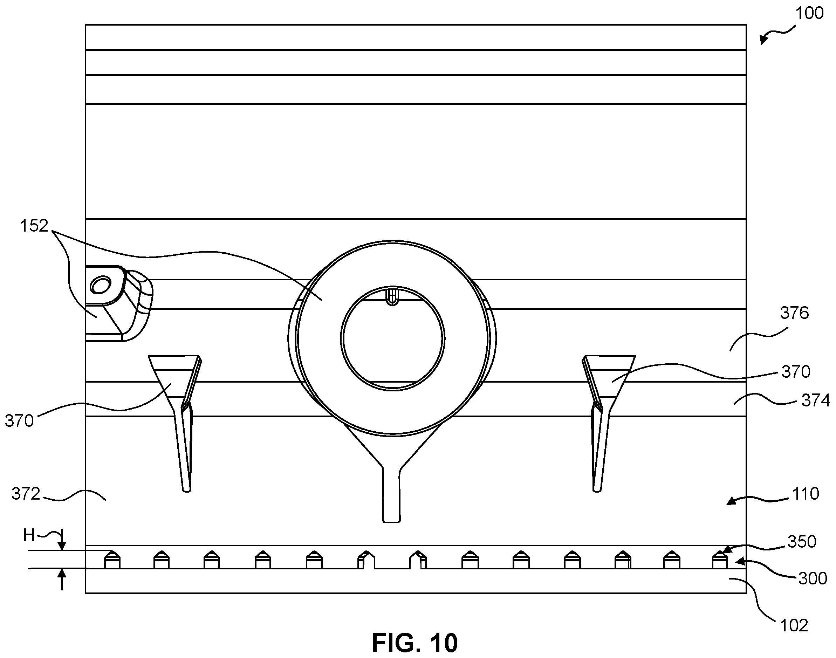

In some embodiments, the temperature of base plate 102 may increase by heat produced in additively manufacturing component 110. However, due to the size differences between base plate 102 and component 110 there would generally be a large thermal gradient at the interface between the component 110 and base plate 102 while the temperature of base plate 102 increases. As shown, for example, in FIG. 10, plurality of struts 300 is formed on base plate 102 and then component 110 is formed on plurality of struts 300. Plurality of struts 300 are at a first temperature as struts 300 are formed. In some embodiments, heat from the plurality of struts 300 can transfer to localized regions of base plate 102 under each strut of the plurality of struts 300, such that the localized regions of base plate 102 are at a second temperature. As plurality of struts 300 continue to be formed and increase in height, the second temperature of base plate 102 continues to increase. In some embodiments, when the first temperature of the plurality of struts 300 and the second temperature of base plate 102 are substantially equal or at steady state temperature, the thermal stresses are sufficiently low enough that full hoop component 110 can be formed on the plurality of struts 300 with reduced risk of deformation. In some embodiments, plurality of struts 300 delay formation of thermal stresses in component 110.

In some embodiments, when the plurality of struts 300 have height H, the first temperature of the plurality of struts 300 and the second temperature of the base plate 102 are substantially equal and/or at steady state temperature. In some embodiments, the first temperature of the plurality of struts 300 and second temperature of base plate 102 are substantially equal when the plurality of struts 300 have height H between about 2 millimeters and about 15 millimeters. In some embodiments, the first temperature of the plurality of struts 300 and second temperature of base plate 102 are substantially equal when the plurality of struts 300 have height H between about 6 millimeters and about 12 millimeters. In some embodiments, the first temperature of the plurality of struts 300 and second temperature of base plate 102 are substantially equal when the plurality of struts 300 have height H at about 10 millimeters.

In some embodiments, the temperatures are substantially equal when the first temperature of the plurality of struts 300 and second temperature of base plate 102 are between about 80 degrees Celsius and about 120 degrees Celsius. In some embodiments, the temperatures are substantially equal when the first temperature of the plurality of struts 300 and second temperature of base plate 102 are between about 90 degrees Celsius and about 110 degrees Celsius. In some embodiments, the temperatures are substantially equal when the first temperature of the plurality of struts 300 and second temperature of base plate 102 are about 100 degrees Celsius. In some embodiments, the temperatures are substantially equal when the second temperature of base plate 102 is within about 20 percent of the first temperature of the plurality of struts 300. In some embodiments, the temperatures are substantially equal when the second temperature of base plate 102 is within about 10 percent of the first temperature of the plurality of struts 300. In some embodiments, the temperatures are substantially equal when the second temperature of base plate 102 is within about 5 percent of the first temperature of the plurality of struts 300.

In some embodiments, a transition region 350 may be formed between the plurality of struts 300 and component 110. Transition region 350 may connect adjacent struts of the plurality of struts 300 and provide geometry to transition thermal stresses into a full hoop component. In some embodiments, transition region 350 forms arches between adjacent struts of the plurality of struts. In some embodiments, the arches have a radius defined by the gap between the adjacent struts. In some embodiments, arches may be formed by a compound radii.

In some embodiments, a second plurality of struts 370 may be formed on first component 110 and configured to reduce circumferential distortion between first region 372 and third region 376. In some embodiments, second plurality of struts 370 may maintain roundness of component 110 between adjacent full hoop regions 372, 376 of component 110 as shown, for example, in FIG. 10. In some embodiments, second plurality of struts 370 may be circumferentially spaced apart around component 110. In some embodiments, second plurality of struts 370 may extend between two full hoop regions 372, 376 of first component 110 separated by a non-hoop region 374 of component 110. For example, a first region 372 may extend fully around a circumference of component 110, a second region 374 may extend above first region 372 and include a plurality of apertures extending through second region 374, and a third region may extend above second region 374 and extend fully around a circumference of component 110. Plurality of struts 370 may extend between first region 372 and third region 376 such that third region 376 is radially and circumferentially supported by first region 372 via the plurality of struts 370.

In some embodiments, plurality of struts 300 and second plurality of struts 370 are formed with component 110 as shown, for example in FIG. 12A. In some embodiments, plurality of struts 300 are partially machined after formation of first component 110 and before second component 112 is coupled to first component 110 as shown, for example in FIG. 12B. In some embodiments, partially machining plurality of struts 300 may form a datum plane for first component 110 such that other features of component 110 may be machined relative to the partially machined plurality of struts 300. In some embodiments, plurality of struts 300 are completely machined off article 100 after first component 110 and second component 112 are coupled together as shown, for example, in FIG. 12C. In some embodiments, second plurality of struts 370 are partially machined on article 100 after first component 110 and second component 112 are coupled together as shown, for example, in FIG. 12C.

### Example Manufacturing Steps To Form Article 100

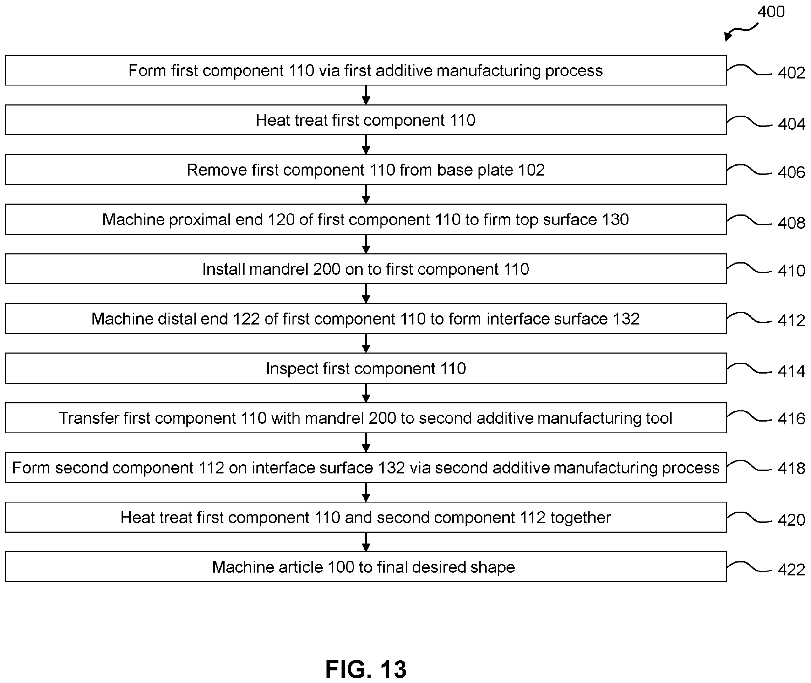

An example method 400 of manufacturing a hybrid structure, such as article 100, is shown in FIG. 13. Method 400 includes the following steps:
Step 402: First component 110 can be formed on base plate 102 via a first additive manufacturing process. First additive manufacturing process can be one of Laser Powder Bed Fusion, Laser-Powder Direct Energy Deposition, Wire-fed Direct Energy Deposition, Weld Arc Additive Manufacturing, Binder Jetting, and/or Bound Powder Extrusion. In some embodiments, plurality of struts 300 can be formed directly on base plate 102, and first component 110 can be formed on plurality of struts.
Step 404: First component 110 can be heat treated while attached to base plate 102. For example, first component 110 can be heat treated via hot isostatic pressing (HIP), or other heat treatment.
Step 406: First component 110 can be removed from base plate 102. For example, proximal end 120 can be EDM wire cut to remove first component 110 from base plate 102, either at the base of, through the body of, or above the plurality of struts 300. In various embodiments, the step 404 of heat treatment can be repeated after removal from base plate 102, to conclude step 406.
Step 408: Proximal end 120 of first component 110 can be machined to form top surface 130. First component 110 may be clamped in place using plurality of members 152, printed inner surface 124, or printed outer surface 126 to secure first component 110 while proximal end 120 is machined. In some embodiments, proximal end 120 can be turned, milled, ground, EDM wire cut, or other machined with other suitable methods.
Step 410: Mandrel 200 (or 200') can be assembled on to first component 110 to secure first component 110. Plate 210 of mandrel 200 can be located on and contact top surface 130 of first component 110. Wedge 212 of mandrel 200 can be inserted into first component 110 from the distal end 122 of first component 110 and detachably coupled to plate 210 via bolt 214. Wedge 212 can be configured to contact printed inner surface 124 of first component 110.
Step 412: Distal end 122 of first component 110 can be machined to form interface surface 132 when mandrel 200 is installed on to and secures first component 110. In some embodiments, distal end 122 can be turned, milled, ground, EDM wire cut, or machined with other suitable methods. Vertical surface 142 and other features of first component 110, such as members 152, can also be machined in step 412.
Step 414: Preliminary inspection of first component 110 can be completed such as dimensional inspections, material inspections, water flow testing, and other component testing procedures. In some embodiments, mandrel 200 may be removed for inspections such as water flow testing. In some embodiments, mandrel 200 may remain installed for inspections such as dimensional inspections.
Step 416: First component 110 can be transferred, with mandrel 200 installed, to the second additive manufacturing tool. For example, mandrel 200 may be used to support first component 110 for transportation to avoid damage to first component 110.
Step 418: Second component 112 can be formed directly on interface surface 132 of first component 110 via a second additive manufacturing process. Second additive manufacturing process can be one of Laser Powder Bed Fusion, Laser-Powder Direct Energy Deposition, Wire-fed Direct Energy Deposition, Weld Arc Additive Manufacturing, Binder Jetting, and/or Bound Powder Extrusion.
Step 420: Heat treat article 100, including first component 110 and second component 112 together. For example, heat treatment parameters can be selected that increase the ductility of the first material 128 and also increase the strength of the second material of the second material 168 for mutual benefit of the overall component of article 100.
   Step 422: Machine article 100 to final desired shape and to include final desired features. In some embodiments, mandrel 200 may be removed for step 422 and a different suite of tools used to machine the final features of article 100. In some embodiments, final machining processes can include turning, milling, grinding, EDM wire cutting, or other suitable machining methods.

### Conclusion

The disclosure presents an additively manufactured article manufactured using two different additive manufacturing processes, the article comprising:
a first component having a first material, the first component comprising a printed inner surface, a printed outer surface, and an interface surface extending from the printed inner surface to the printed outer surface, the first component having a first beading characteristic of a first additive manufacturing process; and
a second component coupled to and extending away from the interface surface of the first component, the second component having a second beading characteristic of a second additive manufacturing process, the second additive manufacturing process being different from the first additive manufacturing process,

wherein the first material is a low thermal conductivity material, and
wherein the interface surface is a planar surface.

The article is presented wherein the first component is a powder-bed fusion component.

The article is presented wherein the first material is a nickel chromium superalloy.

The article is presented wherein the second component is a direct-energy deposition component.

The article is presented wherein the second component comprises a second material, different from the first material.

The article is presented wherein the second material is an iron-nickel superalloy.

The article is presented wherein the first component further comprises a plurality of ports extending away from the printed outer surface, and wherein no ports are formed on the second component.

The article is presented wherein a cross-section of the first component is substantially circular and the first component further comprises members extending radially from the printed outer surface, and wherein the second component comprises a substantially smooth outer surface.

The article is presented wherein the interface surface is substantially a circle and comprises at least two lands extending circumferentially around the circle, and wherein the second component couples to the at least two lands.

The article is presented wherein the interface surface has a first width between the printed inner surface and the printed outer surface, and wherein each of the at least two lands have a second width between ten percent and thirty percent of the first width.

The article is presented wherein the second width is between 0.5 mm and 1.5 mm.

The article is presented wherein the second component extends perpendicularly away from the interface surface.

The article is presented wherein the second component comprises a plurality of wedge-shape layers such that the second component has a conical shape.

The article is presented wherein the second component couples to the first component by one of micro-welding or fusing.

The disclosure presents a method of manufacturing a hybrid structure comprising:
forming a first component via additive manufacturing on a base plate, the first component having a low thermal conductivity material and comprising a proximal end at the base plate and a distal end opposite the proximal end;
removing the first component at the proximal end from the base plate;
machining the distal end of the first component to form an interface surface;
forming a second component via additive manufacturing on the interface surface such that the second component couples to and extends away from the interface surface of the first component,
wherein the interface surface is a planar surface.

The method is presented wherein the second component extends perpendicularly away from the first component at the interface surface.

The method is presented wherein forming the second component comprises depositing a plurality of wedge shape layers such that the second component forms a conical shape.

The method is presented wherein the interface surface is substantially a circle and comprises at least two lands extending circumferentially around the circle, and wherein the second component is formed on the at least two lands.

The method is presented wherein forming the first component comprises powder-bed fusion.

The method is presented wherein forming the second component comprises direct-energy deposition.

The method is presented wherein the low thermal conductivity material of the first component is a nickel-chromium superalloy, and wherein the second component comprises an iron-nickel superalloy material.

The method is presented wherein removing the first component from the base plate comprises machining the proximal end to form a top surface.

The method is presented wherein the interface surface is parallel with the top surface.

The method is presented further comprising heat-treating the first component together with the second component.

The disclosure presents an article comprising:
a first component comprising an interface surface and an inner surface;
a mandrel detachably coupled to the first component, the mandrel comprising a plate and a wedge removably coupled to the plate; and
a second component coupled to and extending away from the interface surface of the first component, the mandrel configured to maintain a roundness of the first component when the second component is coupled to the first component.

The disclosure presents an article comprising:
a first component comprising an interface surface and an inner surface;
a mandrel detachably coupled to the first component and applying a force to the inner surface of the first component to counteract an internal stress within the first component, thereby changing a shape of the first component to a corrected shape; and
a second component coupled to and extending away from the interface surface of the first component, the second component configured to change shape in response to detachment of the mandrel from the first component and responsive to changing the shape of the first component from the corrected shape.

The article is presented wherein the first component comprises a top surface opposite the interface surface, and wherein the plate contacts the top surface.

The article is presented wherein the wedge contacts the inner surface.

The article is presented wherein the wedge contacts less than twenty percent of the inner surface.

The article is presented wherein the inner surface comprises a plurality of ribs, and wherein the wedge contacts the plurality of ribs.

The article is presented wherein a bottom surface of the wedge is spaced apart from the interface surface.

The article is presented wherein the mandrel further comprises a bolt configured to detachably couple the plate to the wedge.

The article is presented wherein the plate comprises a center aperture configured to center the first component on a tool bed for manufacture of the second component.

The disclosure presents a method of manufacturing a hybrid structure comprising:
forming a first component via additively manufacturing on a base plate;
removing the first component from the base plate;
inserting a mandrel into the first component;

machining an interface surface into the first component; and
   forming a second component via additive manufacturing on the interface surface of the first component;
wherein the mandrel is configured to maintain a roundness of the first component during the forming of the second component.

The method is presented wherein the mandrel maintains a roundness tolerance of +/- 0.25 mm of the first component during the forming of the second component.

The method is presented wherein the mandrel comprises a plate and a wedge removably coupled to the plate.

The method is presented wherein removing the first component from the base plate comprises machining a top surface into the first component,
wherein the top surface is opposite the interface surface, and
wherein the plate of the mandrel contacts the top surface.

The method is presented wherein the interface surface is parallel with the top surface.

The method is presented wherein inserting the mandrel into the first component comprises:
arranging the plate on the top surface of the first component;
inserting the wedge into the first component at a distal end of the first component opposite the top surface;
engaging the wedge with a conical inner surface of the first component;
coupling the plate and wedge together to center the first component on the mandrel.

The method is presented wherein the mandrel does not substantially deform the first component.

The method is presented wherein forming the first component comprises powder-bed fusion.

The method is presented wherein forming the second component comprises direct-energy deposition.

The method is presented wherein the first component comprises a nickel-chromium superalloy, and wherein the second component comprises an iron-nickel superalloy material.

The disclosure presents a method of additively manufacturing a component comprising:
forming a plurality of struts on a base plate, the forming of the plurality of struts causing the base plate to heat;
continuing formation of the plurality of struts until a first temperature of the plurality of struts is substantially equal to a second temperature of the base plate; and
forming a component on the plurality of struts only when the first temperature is substantially equal to the second temperature,
wherein the plurality of struts is configured to delay thermal stress formation in the component.

The method is presented wherein each strut of the plurality of struts is circumferentially spaced apart from an adjacent strut of the plurality of struts.

The method is presented wherein each strut of the plurality of struts is substantially equally spaced apart around the circumference of the plurality of struts.

The method is presented wherein the first temperature and the second temperature are in equilibrium between 80 degrees Celsius and 120 degrees Celsius.

The method is presented wherein the first temperature and the second temperature are in equilibrium at about 100 degrees Celsius.

The method is presented wherein the plurality of struts extends between 2 millimeters and 15 millimeters from the base plate.

The method is presented wherein the plurality of struts extends about 10 millimeters from the base plate.

The method is presented further comprising removing the plurality of struts and the cylindrical component from the base plate.

The method is presented further comprising machining the plurality of struts to form a datum surface.

The method is presented further comprising machining the cylindrical component to remove the plurality of struts.

The method is presented wherein the cylindrical component further comprises a first cylindrical feature and a second cylindrical feature, and a second plurality of struts that extends between the first feature and the second feature, and
wherein the second plurality of struts is configured to reduce circumferential distortion between the first cylindrical feature and the second cylindrical feature.

The method is presented wherein each strut of the second plurality of struts is circumferentially spaced apart from an adjacent strut of the second plurality of struts.

The method is presented further comprising removing the second plurality of struts from the cylindrical component.

The method for producing any of the articles or hybrid structure described herein may include providing or storing a digital representation of the article or hybrid structure, including digital representations of the first component and second component, in one or more computer readable storage media. The digital representation of the first component may be stored in the same or different storage media from the digital representation of the first component. Optionally, the method further comprises additively manufacturing (or "3D-printing") the first and/or second component based on the digital representations thereof.

The method may further comprise storing or providing operating instructions adapted to control an additive manufacturing device of any of the types described in the present disclosure using said digital representation thereof. The method may further comprise providing or storing operating instructions adapted to: control a first additive manufacturing device to fabricate the first component using the digital representation of the first component when corresponding data is relayed to the first additive manufacturing device. The method may further comprise providing or storing operating instructions adapted to: control a second additive manufacturing device to fabricate the second component using the digital representation of the second component when corresponding data is relayed to the second additive manufacturing device.

The operating instructions may be provided by or stored on one or more computer-readable storage media. The operating instructions may be adapted to control the first additive manufacturing device and second additive manufacturing device to fabricate any of the first component and/or second component, respectively, as described in the present disclosure. The operating instructions for controlling the first additive manufacturing device may be stored in the same or different storage media from the operating instructions for controlling the second additive manufacturing device. Optionally, the entire first component and second component is manufactured using additive manufacturing in this way.

The digital representations may be provided by or stored on a computer-readable storage medium and provided to and/or stored on one or more additive manufacturing devices. The additive manufacturing devices are configured to additively manufacture the first or second components, respectively, using the first or second additive manufacturing processes and/or methods and/or operating instructions described herein, based on the digital representations.

It is to be appreciated that the Detailed Description section, and not any other section, is intended to be used to interpret the claims. Other sections can set forth one or more but not all embodiments as contemplated by the inventors, and thus, are not intended to limit this disclosure or the appended claims in any way.

While this disclosure describes example embodiments for example fields and applications, it should be understood that the disclosure is not limited thereto. Other embodiments and modifications thereto are possible, and are within the scope and spirit of this disclosure. For example, and without limiting the generality of this paragraph, embodiments are not limited to the hardware and/or entities illustrated in the figures and/or described herein. Further, embodiments (whether or not explicitly described herein) have significant utility to fields and applications beyond the examples described herein.

Embodiments have been described herein with the aid of functional baseing blocks illustrating the implementation of specified functions and relationships thereof. The boundaries of these functional baseing blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different from those described herein.

References herein to "an embodiment," "some embodiments," "an example," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art to incorporate such feature, structure, or characteristic into other embodiment whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described embodiments, which are merely examples, but should be defined only in accordance with the following claims and their equivalents.

Also described herein are the following numbered clauses:
Clause 1. An additively manufactured article manufactured using two different additive manufacturing processes, the article comprising:
   a first component having a first material, the first component comprising a printed inner surface, a printed outer surface, and an interface surface extending from the printed inner surface to the printed outer surface, the first component having a first beading characteristic of a first additive manufacturing process; and
   a second component coupled to and extending away from the interface surface of the first component, the second component having a second beading characteristic of a second additive manufacturing process, the second additive manufacturing process being different from the first additive manufacturing process,
   wherein the first material is a low thermal conductivity material, and
   wherein the interface surface is a planar surface.
Clause 2. The article of clause 1, wherein the first component is a powder-bed fusion component.
Clause 3. The article of clause 1 or 2, wherein the first material is a nickel chromium superalloy.
Clause 4. The article of clause 1, 2 or 3, wherein the second component is a direct-energy deposition component.
Clause 5. The article of any preceding clause, wherein the second component comprises a second material, different from the first material.
Clause 6. The article of any preceding clause, wherein the second material is an iron-nickel superalloy.
Clause 7. The article of any preceding clause, wherein the first component further comprises a plurality of ports extending away from the printed outer surface, and wherein no ports are formed on the second component.
Clause 8. The article of any preceding clause, wherein a cross-section of the first component is substantially circular and the first component further comprises members extending radially from the printed outer surface, and wherein the second component comprises a substantially smooth outer surface.
Clause 9. The article of any preceding clause, wherein the interface surface is substantially a circle and comprises at least two lands extending circumferentially around the circle, and wherein the second component couples to the at least two lands.
Clause 10. The article of clause 9, wherein the interface surface has a first width between the printed inner surface and the printed outer surface, and wherein each of the at least two lands have a second width between ten percent and thirty percent of the first width.
Clause 11. The article of clause 10, wherein the second width is between 0.5 mm and 1.5 mm.
Clause 12. The article of any preceding clause, wherein the second component extends perpendicularly away from the interface surface.
Clause 13. The article of any preceding clause, wherein the second component comprises a plurality of wedge-shape layers such that the second component has a conical shape.
Clause 14. The article of any preceding clause, wherein the second component couples to the first component by one of micro-welding or fusing.
Clause 15. A method of manufacturing a hybrid structure comprising:
   forming a first component via additive manufacturing on a base plate, the first component having a low thermal conductivity material and comprising a proximal end at the base plate and a distal end opposite the proximal end;
   removing the first component at the proximal end from the base plate;
   machining the distal end of the first component to form an interface surface;
   forming a second component via additive manufacturing on the interface surface such that the second component couples to and extends away from the interface surface of the first component,
   wherein the interface surface is a planar surface.
Clause 16. The method of clause 15, wherein the second component extends perpendicularly away from the first component at the interface surface.
Clause 17. The method of clause 15 or 16, wherein forming the second component comprises depositing a plurality of wedge shape layers such that the second component forms a conical shape.
Clause 18. The method of clause 15, 16 or 17, wherein the interface surface is substantially a circle and comprises at least two lands extending circumferentially around the circle, and wherein the second component is formed on the at least two lands.
Clause 19. The method of any of clauses 15-18, wherein forming the first component comprises powder-bed fusion.
Clause 20. The method of any of clauses 15-19, wherein forming the second component comprises direct-energy deposition.
Clause 21. The method of any of clauses 15-20, wherein the low thermal conductivity material of the first component is a nickel-chromium superalloy, and wherein the second component comprises an iron-nickel superalloy material.
Clause 22. The method of any of clauses 15-21, wherein removing the first component from the base plate comprises machining the proximal end to form a top surface.
Clause 23. The method of clause 22, wherein the interface surface is parallel with the top surface.
Clause 24. The method of any of clauses 15-23, further comprising heat-treating the first component together with the second component.
Clause 25. The method of any of clauses 15-24, wherein forming the first component and second component comprises forming the first component and second component as defined in any of clauses 1-14.
Clause 26. An article according to any of clauses 1-14 obtainable by the method of any of clauses 15-25.
Clause 26. One or more computer-readable media storing data which defines both:
   a digital representation of the article of any of clauses 1-14 including digital representations of the first component and second component; and
   operating instructions adapted to:
      control a first additive manufacturing device to fabricate the first component using the digital representation of the first component when corresponding data is relayed to the first additive manufacturing device; and
      control a second additive manufacturing device to fabricate the second component using the digital representation of the second component when corresponding data is relayed to the second additive manufacturing device.
Clause 27. The one or more computer-readable media of clause 26, wherein the operating instructions are adapted to control the first additive manufacturing device and second additive manufacturing device to fabricate the first component and second component, respectively, according to the method of any of clauses 15-25.
Also described herein are the following numbered items:
Item 1.An article comprising:
   a first component comprising an interface surface and an inner surface;
   a mandrel detachably coupled to the first component, the mandrel comprising a plate and a wedge removably coupled to the plate; and
   a second component coupled to and extending away from the interface surface of the first component, the mandrel configured to maintain a roundness of the first component when the second component is coupled to the first component.
Item 2.The article of item 1, wherein the first component comprises a top surface opposite the interface surface, and wherein the plate contacts the top surface.
Item 3.The article of item 1 or 2, wherein the wedge contacts the inner surface.
Item 4.The article of item 3, wherein the wedge contacts less than twenty percent of the inner surface.
Item 5.The article of any of items 1-4, wherein the inner surface comprises a plurality of ribs, and wherein the wedge contacts the plurality of ribs.
Item 6.The article of any of items 1-5, wherein a bottom surface of the wedge is spaced apart from the interface surface.
Item 7.The article of any preceding item, wherein the mandrel further comprises a bolt configured to detachably couple the plate to the wedge.
Item 8.The article of any preceding item, wherein the plate comprises a center aperture configured to center the first component on a tool bed for manufacture of the second component.
Item 9.A method of manufacturing a hybrid structure comprising:
   forming a first component via additive manufacturing;
   inserting a mandrel into the first component;
   machining an interface surface into the first component; and
   forming a second component via additive manufacturing on the interface surface of the first component;
   wherein the mandrel is configured to maintain a roundness of the first component during the forming of the second component,
   optionally wherein the first component is additively manufacture on a base plate, and the method further comprises removing the first component from the base plate.
Item 10. The method of any of items 9, wherein the mandrel maintains a roundness tolerance of +/- 0.25 mm of the first component during the forming of the second component.
Item 11. The method of item 9 or 10, wherein the mandrel comprises a plate and a wedge removably coupled to the plate.
Item 12. The method of item 11, wherein removing the first component from the base plate comprises machining a top surface into the first component,
   wherein the top surface is opposite the interface surface, and
   wherein the plate of the mandrel contacts the top surface.
Item 13. The method of item 12, wherein the interface surface is parallel with the top surface.
Item 14. The method of item 12 or 13, wherein inserting the mandrel into the first component comprises:
   arranging the plate on the top surface of the first component;
   inserting the wedge into the first component at a distal end of the first component opposite the top surface;
   engaging the wedge with a conical inner surface of the first component;
   coupling the plate and wedge together to center the first component on the mandrel.
Item 15. The method of any of items 9-14, wherein the mandrel does not substantially deform the first component.
Item 16. The method of any of items 9-15, wherein forming the first component comprises powder-bed fusion.
Item 17. The method of any of items 9-16, wherein forming the second component comprises direct-energy deposition.
Item 18. The method of any of items 9-17, wherein the first component comprises a nickel-chromium superalloy, and wherein the second component comprises an iron-nickel superalloy material.
Item 19. An article comprising:
   a first component comprising an interface surface and an inner surface;
   a mandrel detachably coupled to the first component and applying a force to the inner surface of the first component to counteract an internal stress within the first component, thereby changing a shape of the first component to a corrected shape; and
   a second component coupled to and extending away from the interface surface of the first component, the second component configured to change shape in response to detachment of the mandrel from the first component and responsive to changing the shape of the first component from the corrected shape.
Also described herein are the following numbered embodiments:
Embodiment 1. A method of additively manufacturing a component comprising:
   forming a plurality of struts on a base plate, the forming of the plurality of struts causing the base plate to heat;
   continuing formation of the plurality of struts until a first temperature of the plurality of struts is substantially equal to a second temperature of the base plate; and
   forming the component on the plurality of struts only when the first temperature is substantially equal to the second temperature,
   optionally wherein the plurality of struts is configured to delay thermal stress formation in the component.
Embodiment 2. The method of embodiment 1, wherein each strut of the plurality of struts is circumferentially spaced apart from an adjacent strut of the plurality of struts.
Embodiment 3. The method of embodiment 2, wherein each strut of the plurality of struts is substantially equally spaced apart around the circumference of the plurality of struts.
Embodiment 4. The method of embodiment 1, 2 or 3, wherein the first temperature and the second temperature are in equilibrium between 80 degrees Celsius and 120 degrees Celsius.
Embodiment 5. The method of embodiment 4, wherein the first temperature and the second temperature are in equilibrium at about 100 degrees Celsius.
Embodiment 6. The method of any preceding embodiment, wherein the plurality of struts extends between 2 millimeters and 15 millimeters from the base plate.
Embodiment 7. The method of embodiment 6, wherein the plurality of struts extends about 10 millimeters from the base plate.
Embodiment 8. The method of any preceding embodiment, further comprising removing the plurality of struts and the cylindrical component from the base plate.
Embodiment 9. The method of embodiment 8, further comprising machining the plurality of struts to form a datum surface.
Embodiment 10. The method of embodiment 8 or 9, further comprising machining the cylindrical component to remove the plurality of struts.
Embodiment 11. The method of any preceding embodiment, wherein the cylindrical component further comprises a first cylindrical feature and a second cylindrical feature, and a second plurality of struts that extends between the first feature and the second feature, and
   optionally wherein the second plurality of struts is configured to reduce circumferential distortion between the first cylindrical feature and the second cylindrical feature.
Embodiment 12. The method of embodiment 11, wherein each strut of the second plurality of struts is circumferentially spaced apart from an adjacent strut of the second plurality of struts.
Embodiment 13. The method of embodiment 11 or 12, further comprising removing the second plurality of struts from the cylindrical component.

## Claims

1. An additively manufactured article comprising:
a first component comprising a first material, the first component comprising:
an inner surface,
an outer surface,
an annular interface surface extending from the inner surface to the outer surface,
and
at least two lands extending circumferentially around the interface surface,
wherein the at least two lands are spaced apart from each other; and
a second component coupled to the at least two lands and extending away from the interface surface of the first component.

2. The article of claim 1, wherein the first component is a powder-bed fusion component, and/or wherein the second component is a direct-energy deposition component.

3. The article of claim 1 or 2, wherein the first material has a room temperature thermal conductivity of between about 5 watts per metre Kelvin and about 15 watts per metre Kelvin, and/or
wherein the first material is a metal or an alloy, and/or
wherein the first material is a nickel chromium superalloy, and/or
wherein the second component comprises a second material, different from the first material, and/or
wherein the second component comprises a second material, wherein the second material is a metal or an alloy, and/or
wherein the second component comprises a second material, wherein the second material is an iron-nickel superalloy.

4. The article of any preceding claim, wherein a length and/or diameter of the first component is smaller than a length and/or diameter of the second component; and/or
wherein the first component has a smaller volume than the second component; and/or
wherein a first component length in a first dimension normal to the interface surface is smaller than a second component length in the first dimension, wherein the first dimension is normal to the interface surface; and/or
wherein the first component has a wall thickness which is less than a wall thickness of the second component; and/or
wherein the first component comprises at least one aperture or recess having a smaller diameter than any aperture or recess formed in the second component.

5. The article of any preceding claim, wherein the first component further comprises a plurality of ports extending away from the outer surface, and/or
wherein no ports are formed on the second component.

6. The article of any preceding claim, wherein a cross-section of the first component is substantially rotationally symmetrical, optionally circular, and the first component further comprises members extending radially from the outer surface, and/or
wherein the second component comprises a substantially smooth outer surface.

7. The article of any preceding claim, optionally wherein the interface surface has a first width between the inner surface and the outer surface, and wherein each of the at least two lands have a second width between ten percent and thirty percent of the first width, optionally wherein the second width is between 0.5 mm and 1.5 mm.

8. The article of any preceding claim, wherein the second component extends perpendicularly away from the interface surface, and/or wherein the second component comprises a plurality of wedge-shape layers such that the second component has a conical shape, and/or wherein the second component couples to the first component by one of micro-welding or fusing.

9. The article of any preceding claim, wherein the first component has a first characteristic of a first additive manufacturing process and the second component has a second characteristic of a second additive manufacturing process, wherein the first additive manufacturing process is different from the second additive manufacturing process,
optionally wherein the first characteristic and/or the second characteristic comprises one or more of:
a beading characteristic;
a microstructure;
a closeout radius;
a surface finish;
a parasitic mass pattern;
a parasitic mass volume.

10. A method of manufacturing a hybrid structure comprising:
forming a first component via a first additive manufacturing process, the first component comprising a proximal end and a distal end opposite the proximal end;
machining the distal end of the first component to form an interface surface;
forming a second component via a second additive manufacturing process on the interface surface such that the second component couples to and extends away from the interface surface of the first component,
wherein the interface surface is a planar surface.

11. The method of claim 10, wherein forming the first component comprises forming the first component via the first additive manufacturing process on a base plate, wherein the proximal end of the first component is at the base plate, and wherein the method further comprises removing the first component at the proximal end from the base plate,
optionally wherein removing the first component from the base plate comprises machining the proximal end to form a top surface,
optionally wherein the interface surface is parallel with the top surface.

12. The method of claim 10 or 11, wherein the second component extends perpendicularly away from the first component at the interface surface, and/or
wherein forming the second component comprises depositing a plurality of wedge shape layers such that the second component forms a conical shape.

13. The method of any of claims 10-12, wherein the first additive manufacturing process is different from the second additive manufacturing process, and/or
wherein the first additive manufacturing process comprises powder-bed fusion, and/or
wherein the second additive manufacturing process comprises direct-energy deposition.

14. The method of any of claims 10-13, further comprising heat-treating the first component together with the second component.

15. The method of any of claims 10-14, wherein the hybrid structure comprises the article of any of claims 1-9.

16. An article according to any of claims 1-9 obtainable by the method of any of claims 10-15.

17. One or more computer-readable media storing data which defines both:
a digital representation of the article of any of claims 1-9 or 16 including digital representations of the first component and second component; and
operating instructions adapted to:
control a first additive manufacturing device to fabricate the first component using the digital representation of the first component when corresponding data is relayed to the first additive manufacturing device; and
control a second additive manufacturing device to fabricate the second component using the digital representation of the second component when corresponding data is relayed to the second additive manufacturing device,
optionally wherein the operating instructions are adapted to control the first additive manufacturing device and second additive manufacturing device to fabricate the first component and second component, respectively, according to the method of any of claims 10-15.
